# EUROPEAN PATENT SPECIFICATION

(11) **EP 2 887 246 B1**
(45) Date of publication and mention of the grant of the patent: **19.02.2020**
(21) Application number: 13306827.0
(22) Date of filing: 20.12.2013
(51) Int. Cl.: G06F 21/10

(54) **METHOD TO SHARE CONTENT WITH AN UNTRUSTED DEVICE**
Verfahren zur gemeinsamen Nutzung von Inhalt mit einer nicht vertrauenswürdigen Vorrichtung
Procédé de partage de contenu avec un dispositif non sécurisé

(43) Date of publication of application: 24.06.2015
(73) Proprietor: Orange, 75015 Paris (FR)
(72) Inventor: Jiang, Peng, London NW9 5ZE (GB); Valverde, Guillaume, London NW10 5HJ (GB)
(74) Representative: Regimbeau

(56) References cited:
- WO-A1-2006/048804
- WO-A1-2013/120100
- US-A1- 2012 291 140

## Description

### FIELD OF THE PRESENT SYSTEM:

The present invention generally relates to electronic devices, and more specifically to the sharing of content hosted on a content server between a trusted and an un-trusted electronic device.

### BACKGROUND OF THE PRESENT SYSTEM:

Mobile handsets have an inherently impoverished Graphical User Interface (GUI) with respect to desktop computers. Small screens and tiny keyboards are typical of mobile handsets that fit in your pocket. Recent so called smartphones have introduced the use of a touch screen in an attempt to simplify the user experience with his mobile handset. Electronic devices such as tablets have adopted similar technologies.

In existing smartphones or tablets, application programs (in short, application) may be controlled using touch inputs. Different touch inputs may control the application in different ways. For instance, a user touching an application icon will cause a control of the desktop GUI that will launch the application corresponding to the touched icon. The desktop GUI of the iPhone™ comprising a plurality of application icons may be seen as an application itself. A sliding motion across the desktop GUI, or a drag touch input, will cause another control of the desktop GUI, like displaying another set of application icons hidden so far. The user gets a feeling that he is browsing through pages of application icons to select an interesting application program.

The new smartphones or tablets are now capable of functions far beyond simple phone services. They can include media playing and recording, web browsing, gaming ...

Among media applications, it is possible now to play media like videos or music with these devices. The media content can be locally stored on the electronic device. But, more and more, media content is streamed over a data connection from a media server or from a content provider.

Smartphones are just one of many devices available today to a user. Other devices like music players, TVs, computers, pads ... can also play media content. Indeed, the emergence of connected devices has extended the realm of the possible when it comes for the user to interact with and share a media content. This creates the opportunity for a variety of players (manufacturers, pay-TV operators, Internet companies, telecom operators ...) to offer multi-screens solutions between devices.

Sharing solutions are now readily available to distribute the media content among the different user devices. A user for instance can send a picture from one smartphone to another target smartphone provided they both host the same sharing application. To do so the devices are paired and the user has the feeling that he is actually displacing the picture from one device to the other by simply sliding the picture with his finger in the direction of the receiving device.

Other solutions are available for videos played for instance on a tablet. Apple Airplay® is a solution proposed for local media content. Google Fling® offers a similar user's experience. Another solution is proposed by Snapstick™. It consists in browsing a catalog of different videos, and upon selection of one of them (an activation of a transfer), you can shake your device and the selected video is streamed directly to another predefined device.

Such sharing is based on the assumption that the different devices involved in the sharing have valid access rights to the content to be shared. A problem arises when a first user, accessing content on a first electronic device through a subscription to a content service for instance, would like to watch or share this content with the electronic device of a second user. If that second user does not have a subscription to the same content provider, or if that second user has a different level of subscription (the first user may have a premium subscription for example), the second user will not be able to access the content on the second device.

One solution would be for the first user to provide his credentials to access the content service from the second device. But such solution is not satisfactory when the second electronic device is not a device trusted by the first user. Indeed, this solution is against personal privacy protection.

Thus, there is still a need for a method for sharing content hosted on a server or cloud service between a trusted electronic device and an untrusted electronic device.

US2012/291140 describes a typical DRM system.

### SUMMARY OF THE PRESENT SYSTEM:

The invention is set out in the appended set of claims.

It is an object of the present system to overcome disadvantages and/or make improvements in the prior art.

The present system discloses a method to share a content hosted on a database accessible to a content provider, the method being implemented by the content provider and comprising the steps of receiving a first message from a first device comprising a reference to a content hosted on the server, generating a first token, the first token being associated to the reference to a content hosted on the server, sending the token to the first device receiving a request from a second device, the request comprising a second token and, when the first and second token match, sending the content identified by the reference to the second device.

Advantageously, no credentials of the user of the first device are provided to the second device. This is preserving the security and the privacy of the first user, preventing a possible theft of his credentials by any user of the second device. This may thus facilitate the sharing of content on devices such as connected TV.

In one embodiment of present system, the method further comprises the step of identifying through the first token the reference to the content hosted on the server.

Alternatively, the reference allowing an identification of the selected content to be shared may be embedded within the token. This is limiting the necessity of memory on the server side for high load services, as the association between a token and a selected content needs to be stored somehow within the server or a database.

In a complementary embodiment of present system the method further comprises the steps of receiving a second message from the first device and interrupting the sending of the content if the second message comprising an indication of a loss of proximity between the first and the second devices.

In another complementary embodiment of present system the method further comprises the steps of receiving a second message from the first device, the second message being indicative of a proximity of the second device with the first device and interrupting the sending of the content after a predetermined amount of time from the reception of the second message if no third message, also indicative of a proximity of the second device with the first device is not received.

By performing proximity checks, the present system guarantees a certain control on which content is shared and with which devices. For instance, it is not possible for a first user with a first device, sharing a content when meeting with a second user with a second device, to keep alive this sharing after departing.

Advantageously, this proximity check may be performed either by sending a message from the first device to the server indicating that there is loss of proximity, or, quite advantageously, by sending periodic messages indicating the proximity of the two devices, and interrupting the sharing when no new message is received after a predetermined amount of time. This last method is more robust to possible loss of messages between the first device and the server.

In a further complementary embodiment of the present system, the method further comprises, when the first and second token match, the step of revoking the first token if the match is not a first match.

Advantageously, when detecting that another device, different from the second device, is trying to access to a shared content, the token should be revoked and the share service will be stopped as this is indicating quite probably a hacking attempt.

In a complementary embodiment of present system, the method further comprises the step of notifying the first device that the token is revoked.

Indeed, by indicating to the first device that a hacking attempt has been detected, the first device may repeat the first steps of the present system to re-initialize the sharing of the content with the untrusted device.

Another object of the invention is a server operable to access a content hosted on a database, the server further comprising a processor arranged to receive a first message from a first device, the first message comprising a first token, the first token being associated to a second device and a reference to a content hosted on the server, receive a request from the second device, the request comprising a second token and when the first and second token match, sending the content identified by the reference to the second device.

Another object of the invention concerns a computer program or application software, in particular computer programs on or in a non-transitory computer readable medium, suitable for presenting a virtual keyboard on a screen of an electronic device in order to for share a content hosted on a database accessible to a content provider. These programs can use any programming language, and be in the form of source code, binary code, or of code intermediate between source code and object code such as in a partially compiled form, or in any other desirable form for implementing the methods according to the invention.

The information medium may be any entity or device capable of storing the software. For example, the medium can comprise a storage means, such as a ROM, for example a CD/DVD ROM or a microelectronic circuit ROM, or else a magnetic recording means, for example a diskette (floppy disk), USB stick or a hard disk.

### BRIEF DESCRIPTION OF THE DRAWINGS:

The invention is explained in further detail, and by way of example, with reference to the accompanying drawings wherein:
FIGs. 1A and 1B show an electronic device and a server in accordance with an embodiment of the present system;
FIG. 2 shows an illustration of a first embodiment of the present system;
FIG. 3 shows an exemplary flowchart in accordance with another embodiment of the present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, similar reference numbers in different drawings may designate similar elements.

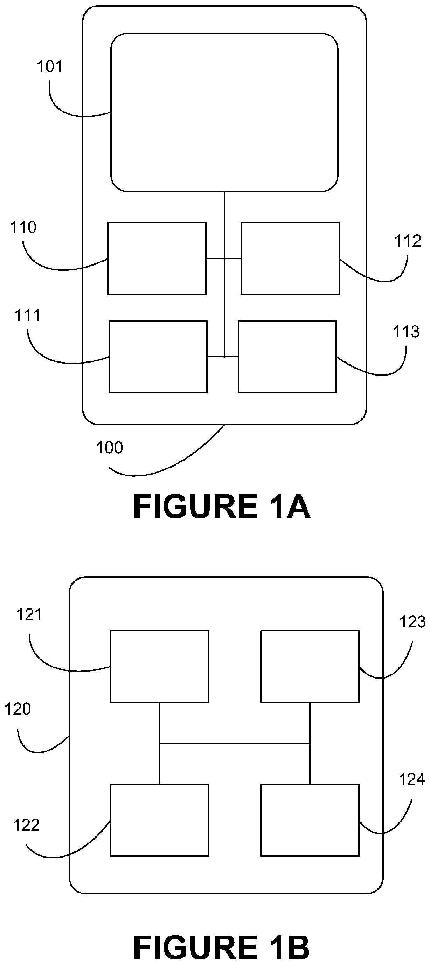

FIG. 1A is an illustration of an exemplary electronic device or mobile device (or in short, device) 100 used in one embodiment of the present system. The mobile device 100 comprises at least a display 101, a processor 110, a memory 111, at least a radio module 112 and optionally a geolocation module 113. The electronic device 100 may possibly integrates others module not represented here. The at least one radio module 112 may be compatible with 2G, 3G, 4G, WiFi, Bluetooth or any wireless technology known to the man skilled in the art. The electronic device 100 may also comprise optionally a wireline compatible network module, such as Ethernet or USB module.

The geolocation module 113 may be a Global positioning System (GPS), GLONASS or GALILEO compatible module, or any other geolocation technology, possibly integrating more than one of these technologies in the same geolocation module 113.

The electronic device 100 may be for instance a mobile phone, a smartphone, a PDA (Personal Digital Assistant), a tablet ...

FIG. 1B is an illustration of an exemplary server 120 that can be used as a content provider. The server 120 may comprise a processor 122, memory 121, at least a network module 123 and optionally a database module 124.

The network module 123 should provide network connectivity to the server 120, quite possibly connecting the server 120 to a local network and also providing Internet access.

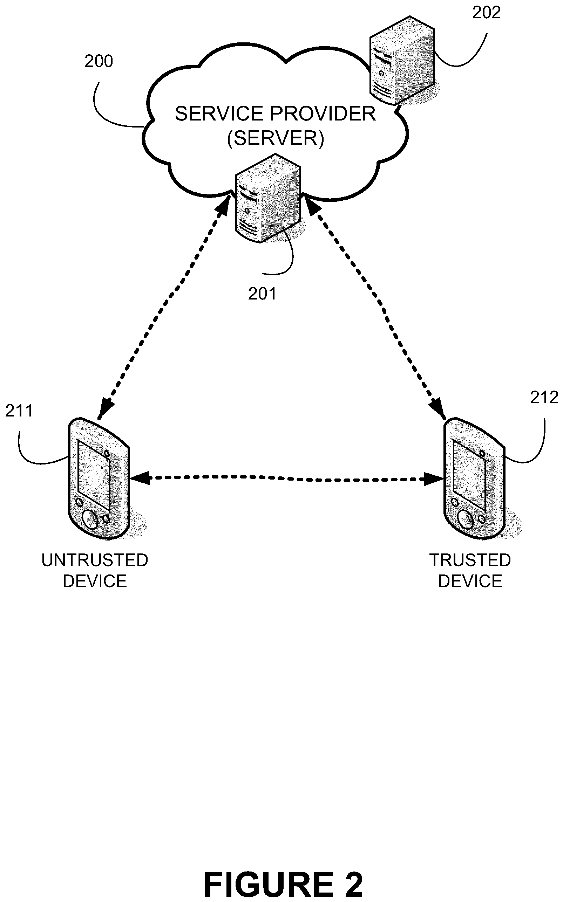

The database module 124 may be integrated in the server 124, but complementarily, the server 120 may also be connected to at least a remote database hosted on others servers, not represented here (see 202 in FIG. 2). The database may comprise any content such as media content (music, photo, video, movie ...).

FIG. 2 shows an illustration of a first embodiment of the present system. The devices 211 and 212 are electronic devices similar to the electronic device described in FIG. 1A. The server 201 is similar to the server 120 described in FIG. 1B.

The electronic device 212 is considered here as the trusted device, meaning that quite possibly it belongs to a first user, said user having for example a subscription to a service provider offering content such as music, video, movie ...

The electronic device 211 is considered here as untrusted, meaning that the device does not belong to the first user but to a second user. Alternatively, the electronic device 211 may belong to the first user, but for any reason, the first user does not want to enter his credentials to access the service provider on this untrusted device. This could be the case if this untrusted device is accessible to many persons, possibly compromising its security or privacy. In an illustration of the present system, the trusted electronic device 212 is a smartphone while the untrusted electronic device 211 is a tablet. Quite possibly, the first user may wish to use the larger screen of the tablet 211 to watch a movie instead of watching the movie on the smaller screen of the smartphone 212.

The server 201 may be hosting the service or content provider, meaning that an application is installed and executed on the server 201, the application providing the service to different electronic devices connecting through any network technology to the server 201. Quite probably, when connecting to the server 201, a user may need to provide credentials, such as a login and a password, to be identified. Different profiles or subscription levels may be attached to a user, for example restricting the content accessible to the said user. Additionally, two users with two different levels of subscription may not access to the same content.

The server 201 may or may not host a database, as described in 124. The server 201 may have a network connection to a remote database, said database being hosted on a server 202, or possibly on various servers similar to 202, as the man skilled in the art knows. Such system may be built on a cloud infrastructure.

To access to the service provider, an application shall be possibly installed on the electronic devices 211 and 212. Alternatively, the service provider may be accessed via web technologies.

From a user perspective, the user of the trusted (or first) device 212 and the user of the untrusted (or second) device 211 shall in a first step go through a pairing process. Such pairing process may be integrated within the installed application provided by the service provider. The user of the trusted device 212 shall access the service provider through his device, e.g. providing credentials to a server 201 to be allowed to access the service.

After, the user of the trusted device 212 may select a given content within a list of content offered by the service provider, for example a movie, to be shared with the untrusted device 211. The server 201 will then generate a token or secure token. The token is associated to the selected content by the server 201. This token may be a randomly generated number or string of character, chosen too difficult to guess. According to the level of security that the present system wishes to obtain, a simple or on the contrary complex algorithm may be used to generate the token. Once generated, the server 201 sends the token to the trusted device 212. As the electronic devices 211 and 212 are paired, the trusted device 212 can send the token to the untrusted device 211. The untrusted device 211 will then connect to the service provider or server 201, providing the token to the server 201 instead, or in complement, of the credentials of the user of the untrusted device.

The server receiving the request from the untrusted device 211 will check the received token. If the received token matches the token previously sent to the trusted device 212, the server can retrieve the content associated to the token and send this content, for example by streaming, to the untrusted device 211. This is done independently of the access level associated to the credentials of the user of the untrusted device 211.

Meanwhile, the paired trusted and untrusted devices maintain a mechanism of "heartbeat". In other words, the trusted device 212 checks periodically that the untrusted device 211 is within certain proximity. Indeed, the shared content shall not be accessible to the untrusted device 211 when the trusted device 212 moves away from the untrusted device 211 as the sharing of the content is allowed because the user of the trusted device 212 has adequate access right to access the selected content, which may not be the case of the untrusted device 211. This is allowing certain flexibility to the user, allowing them to share contents in certain conditions (proximity) while preserving rights of the content provider.

In one embodiment of the present system, when the trusted device 212 detects, possibly via the pairing, that the untrusted device 211 is no more within certain proximity, the trusted device 212 shall send to the server 201 a message indicating that the shared content shall not be shared anymore.

In another embodiment, using any location technology known to the man skilled in the art, for example geolocation technologies as provided by a module such as module 113 in the electronic devices 211 and 212, the two devices may provide their location directly to the server 201. Alternatively, the provision of the location may be shared via the pairing. The trusted device 212 or the server 201 may compare the two locations of the devices 211 and 212, and decide to stop the sharing if the two locations are too far away, for example more than 10 meters. Alternatively, the server 201 may decide that the two devices 211 and 212 may share the content as long as they are connecting to the service provider from a same local area network, that is to say using the same IP address. In those cases, the two devices shall send periodic messages to the server, so the server may compare their locations or IP addresses.

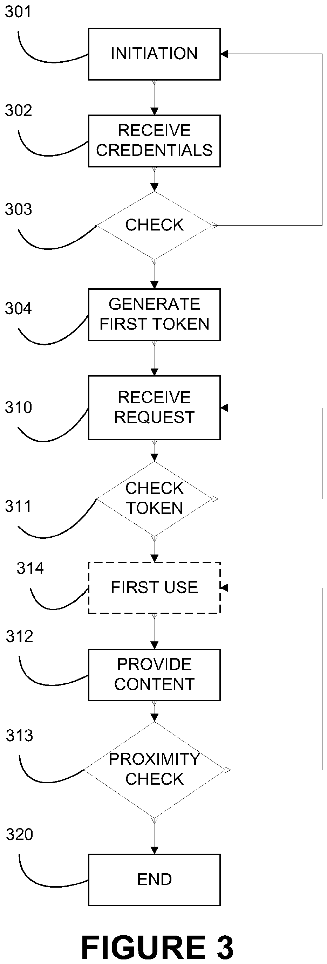

FIG. 3 shows an exemplary flowchart in accordance with another embodiment of the present system. In this embodiment, a content hosted on a database 202 is accessible to a content provider or server 201. A first device 212, called the trusted device, wish to share a content accessible through the content provider or server 201 with a second electronic device 211, called the untrusted device.

In a first step 301, the system needs to be initiated. Such initiation may comprise installing application or software on the untrusted and the trusted devices 211 and 212. Any technology may be used, but preferably, this application may be downloaded from an application store such as App Store™ or Google Play™. Said application may be provided to the application store by the service provider.

The installed application may need some steps of configuration, entering for example credentials or going through a registration process to the service provider.

During the initiation step, the two devices 211 and 212 shall be paired. This may be obtained by a feature of the installed application. Pairing mechanism may rely on technologies such as Bluetooth, Near Field Communications ...

In a step 302, the user of the trusted device 212 logs into the service provider. Such step may be achieved by sending credentials to the server 201.

After receiving these credentials, in a step 303, the server checks that these credentials correspond to a legitimate user, and may retrieve an associated profile, defining for example the content accessible for this user.

The user may then select a content to be shared with the untrusted device 211. Once selected, the trusted or first device 212 sends a message to the server 201 with the reference to the selected content.

In a further step 304, when receiving this message from the trusted or first device 212 comprising a reference to a content hosted on the server, the server 201 generates a first token. The first token is associated to the reference to the selected content. This token is then sent to the first or trusted device 212.

The first token may be stored in a token lookup table or database in association with the reference of the selected content so that the server may be able to manage several requests at the same time.

The first or trusted device 212 shall share with the untrusted device 211 this token, possibly via the pairing mechanism, in a further step not shown in FIG. 3.

In a step 310, the server or content provider 201 receives a request from the second or untrusted device 211, the request comprising a second token.

The received request may be generated by the application previously installed on the untrusted or second device 211. Alternatively, the request may be made via a HTTP or HTTPS request, or via any web technology. In this case, the untrusted or second device 211 may request access to an URL comprising the second token inside.

In a further step 311, the server 201 checks that the received second token matches with an existing token. In the present system the first or trusted device 212 may share several contents at the same time with others untrusted devices (not described here), thus having generated different tokens, one for each shared content. Using the token lookup table, the server 201 will retrieve an entry for a first token that matches the received second token. When the first and second token are a match (e.g. an entry is found in the token lookup table), the server 201 sends the content identified by the reference to the second or untrusted device 211 in the step 312. By a match, it should be understood that they may be equal or corresponding through a transformation function known to the server or either one the devices like an encryption function. From this point, the selected content is being shared with the second or untrusted device 211, possibly via streaming for video or music. It is to be noted that the application installed on the second or untrusted device 211 may prevent the user to save locally the content sent via streaming, so as to preserve the rights of the content provider. Presents system may limit the number of simultaneous content that a user may share at the same time. The two tokens are supposed to be a match before the content is shared. When the second token does not match with any token in the token lookup table, the request is discarded.

In an alternative embodiment of the present system, the server 201 may identify directly through the first token the reference to the content hosted on the server. In this case, no association is made between the first token and a selected token. Information necessary to identify the selected content may be embedded directly within the token. The generation of the token may take into account the reference of the selected content, thus allowing the server 201 to identify a selected content from a received token. For example, a hashing function may be used on the selected content and the calculated hash may be included in the token. The server 201 may then identify a content from a hash retrieved in the token.

Alternatively, in an optional step 314, when the first and second tokens are a match, the server may still revoke the first token if the match is not a first match. In other words, if the server is already sharing a content via a first token but receives another request from another device comprising the same first token, the sharing should be interrupted as this is an abnormal situation. By revoking, it should be understood that the token is removed from any token lookup table, memory or database of the server 201, and thus may not be used to access any content. Alternatively, revoking may correspond to tagging the token as unsafe or unfit for use, thus preventing any further access to content associated to the revoked token. Association of the revoked token to a selected content may also be deleted. This is preventing various devices to access to the same content using the same token. This is not a desired situation in the present system.

In a complementary embodiment of present system, the server 201 then notifies the first or trusted device 212 that the token is revoked. The trusted device 212 will then deduce that the sharing has been interrupted, and repeat the preliminary steps of the present system.

While the selected content is being shared, the server may perform a proximity check as indicated in step 313. Indeed, the server 201 may receive a second message from the first or trusted device 212 and interrupt the sending of the content if the second message comprises an indication of a loss of proximity between the first and the second devices 212 and 211. In other words, the first or trusted device 212 may perform periodic check of the presence of the second or untrusted device 211, possibly relying on the pairing mechanism, and sends a message to the server 201 when a loss of proximity is detected (for example, loss of Bluetooth connection between the two devices).

Alternatively, the server 201 may receive a second message from the first or trusted device 212, the second message being indicative of a proximity of the second or untrusted device 211 with the first or trusted device 212. Then, the server will interrupt the sending of the content after a predetermined amount of time from the reception of this second message if no third message, also indicative of a proximity of the second or untrusted device 211 with the first or trusted device 212, is not received.

In short, in a first embodiment of the present system, the server 201 interrupts the sending of the content to the second or untrusted device 211 when receiving an indication of loss of proximity. In a second embodiment of the present system, if no periodic confirmation of the proximity of the second or untrusted device 211 to the first or trusted device 212 is received, the sending of the content is interrupted by the server 201.

Finally, the above discussion is intended to be merely illustrative of the present system and should not be construed as limiting the appended claims to any particular embodiment or group of embodiments. Thus, while the present system has been described with reference to exemplary embodiments, such as embodiment described in the different figures, it should also be appreciated that numerous modifications and alternative embodiments may be devised by those having ordinary skill in the art without departing from the broader and intended scope of the present system as set forth in the claims that follow. Further, while exemplary illustrations were provided to facilitate an understanding of the present system, other system for sharing a content hosted on a database accessible to a content provider may be provided in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated;
i) the term "plurality of" an element includes two or more of the claimed element, and does not imply any particular range of number of elements; that is, a plurality of elements may be as few as two elements, and may include an immeasurable number of elements, and;
j) the term "greater than" (respectively "lower than") should be understood as "strictly greater than" (resp. "strictly lower than") or "greater than or equal to" (resp. "lower than or equal to"), both implementation being possible unless specifically indicated.

## Claims

1. A method to share a content hosted on a database accessible to a content provider (201), the method being implemented by the content provider (201) and comprising the steps of:
- receiving a first message from a first device (212) comprising a reference to a content hosted on the server (201),
- generating a first token, the first token being associated to the reference to a content hosted on the server (201),
- sending the token to the first device (212),
- receiving a request from a second device (211), the request comprising a second token,
- when the first and second token are a match, sending the content identified by the reference to the second device (211),
the method further comprising the steps of:
- receiving a second message from the first device,
- interrupting the sending of the content if the second message comprising an indication of a loss of proximity between the first and the second devices.

2. A method according to the previous claim, further comprising the step of:
- identifying through the first token the reference to the content hosted on the server.

3. A method according to one of the claims 1 and 2, further comprising the steps of:
- receiving a second message from the first device, the second message being indicative of a proximity of the second device with the first device,
- interrupting the sending of the content after a predetermined amount of time from the reception of the second message if no third message, also indicative of a proximity of the second device with the first device is not received.

4. A method according to one of the previous claims, further comprising, when the first and second tokens are a match, revoking the first token if the match is not a first match.

5. A method according to one of the previous claims, further comprising notifying the first device that the token is revoked.

6. A server operable to access a content hosted on a database, the server further comprising a processor arranged to:
- receive a first message from a first device (212) comprising a reference to a content hosted on the server,
- generate a first token, the first token being associated to the reference to a content hosted on the server,
- send the token to the first device (212),
- receive a request from a second device (211), the request comprising a second token,
- and, when the first and second tokens are a match, send the content identified by the reference to the second device (211),
the processor being further arranged to :
- receiving a second message from the first device,
- interrupting the sending of the content if the second message comprising an indication of a loss of proximity between the first and the second devices.

7. An application program embodied on a non-transitory computer readable medium and arranged to execute the method of claims 1 to 5.

8. A trusted electronic device (212) to share a content hosted on a database accessible to a server (201) with a non-trusted electronic device (211), the said trusted electronic device (212) being arranged to:
- send a first message to the server (201), the said message comprising a reference to a content hosted on the server,
- receive a first token, the first token being associated to the reference to a content hosted on the server (201),
- send the token to a non-trusted electronic device (211) arranged to request access to the content identified by the token,
- send a second message to the server (201), the second message being indicative of a proximity of the non-trusted electronic device (211) with the trusted electronic device (212) to interrupt sharing the content if the second message comprises an indication of a loss of proximity between the non-trusted electronic device (211) and the trusted electronic device (212).

9. A system comprising a server operable to access a content hosted on a database accessible to a server (201), a trusted electronic device (212) to access a content hosted on a database accessible to the server (201), a non-trusted electronic device (211) to access a content hosted on a database accessible to the server (201), the said system being arranged to:
- send to the server (201) a first message from the trusted electronic device (212) comprising a reference to a content hosted on the server (201),
- generate by the server (201) a first token, the first token being associated to the reference to a content hosted on the server (201),
- send from the server (201) the first token to the trusted electronic device (212),
- send to the server (201) a request from the non-trusted electronic device (211), the request comprising a second token,
- when the first and second token are a match, send from the server (201) the content identified by the reference to the non-trusted electronic device (211),
- send to the server (201) a second message from the trusted electronic device (212),
- interrupt by the server (201) the sending of the content if the second message comprising an indication of a loss of proximity between the trusted electronic device (212), and the non-trusted electronic device (211).

## Patentansprüche

1. Verfahren zur gemeinsamen Verwendung eines Inhalts, der in einer Datenbank gehostet wird, auf die ein Inhaltsanbieter (201) Zugriff hat, wobei das Verfahren durch den Inhaltsanbieter (201) implementiert wird und die folgenden Schritte umfasst:
- Empfangen einer ersten Nachricht, die einen Bezug zu einem Inhalt umfasst, der auf dem Server (201) gehostet wird, von einer ersten Vorrichtung (212),
- Erzeugen eines ersten Tokens, wobei das erste Token mit dem Bezug zu einem Inhalt, der auf dem Server (201) gehostet wird, verknüpft ist,
- Senden des Tokens an die erste Vorrichtung (212),
- Empfangen einer Anforderung von einer zweiten Vorrichtung (211), wobei die Anforderung ein zweites Token umfasst,
- wenn das erste und das zweite Token übereinstimmen, Senden des Inhalts, der durch den Bezug identifiziert wird, an die zweite Vorrichtung (211), wobei das Verfahren ferner die folgenden Schritte umfasst:
- Empfangen einer zweiten Nachricht von der ersten Vorrichtung,
- Unterbrechen des Sendens des Inhalts, wenn die zweite Nachricht eine Anzeige eines Verlusts der Nähe zwischen der ersten und der zweiten Vorrichtung umfasst.

2. Verfahren nach dem vorhergehenden Anspruch, das ferner den folgenden Schritt umfasst:
- Identifizieren des Bezugs zum Inhalt, der auf dem Server gehostet wird, durch das erste Token.

3. Verfahren nach einem der Ansprüche 1 und 2, das ferner die folgenden Schritte umfasst:
- Empfangen einer zweiten Nachricht von der ersten Vorrichtung, wobei die zweite Nachricht eine Nähe der zweiten Vorrichtung zur ersten Vorrichtung anzeigt,
- Unterbrechen des Sendens des Inhalts nach einer vorbestimmten Zeitmenge ab dem Empfang der zweiten Nachricht, wenn keine dritte Nachricht, die ebenfalls eine Nähe der zweiten Vorrichtung zur ersten Vorrichtung anzeigt, empfangen wird.

4. Verfahren nach einem der vorhergehenden Ansprüche, das ferner, wenn das erste und das zweite Token übereinstimmen, das Zurückziehen des ersten Tokens umfasst, wenn die Übereinstimmung keine erste Übereinstimmung ist.

5. Verfahren nach einem der vorhergehenden Ansprüche, das ferner das Benachrichtigen der ersten Vorrichtung, dass das Token zurückgezogen wurde, umfasst.

6. Server, der betreibbar ist, auf einen Inhalt zuzugreifen, der in einer Datenbank gehostet wird, wobei der Server ferner einen Prozessor umfasst, der zu Folgendem angeordnet ist:
- Empfangen einer ersten Nachricht, die einen Bezug zu einem Inhalt umfasst, der auf dem Server gehostet wird, von einer ersten Vorrichtung (212),
- Erzeugen eines ersten Tokens, wobei das erste Token mit dem Bezug zu einem Inhalt, der auf dem Server gehostet wird, verknüpft ist,
- Senden des Tokens an die erste Vorrichtung (212),
- Empfangen einer Anforderung von einer zweiten Vorrichtung (211), wobei die Anforderung ein zweites Token umfasst,
- und, wenn das erste und das zweite Token übereinstimmen, Senden des Inhalts, der durch den Bezug identifiziert wird, an die zweite Vorrichtung (211), wobei der Prozessor ferner zu Folgendem angeordnet ist:
- Empfangen einer zweiten Nachricht von der ersten Vorrichtung,
- Unterbrechen des Sendens des Inhalts, wenn die zweite Nachricht eine Anzeige eines Verlusts der Nähe zwischen der ersten und der zweiten Vorrichtung umfasst.

7. Anwendungsprogramm, das sich auf einem nichttransitorischen computerlesbaren Medium befindet und angeordnet ist, das Verfahren nach den Ansprüchen 1 bis 5 auszuführen.

8. Vertrauenswürdige elektronische Vorrichtung (212), die einen Inhalt, der in einer Datenbank gehostet wird, auf die ein Server (201) Zugriff hat, mit einer nicht vertrauenswürdigen elektronischen Vorrichtung (211) gemeinsam verwenden soll, wobei die vertrauenswürdige elektronische Vorrichtung (212) zu Folgendem angeordnet ist:
- Senden einer ersten Nachricht an den Server (201), wobei die Nachricht einen Bezug zu einem Inhalt umfasst, der auf dem Server gehostet wird,
- Empfangen eines ersten Tokens, wobei das erste Token mit dem Bezug zu einem Inhalt, der auf dem Server (201) gehostet wird, verknüpft ist,
- Senden des Tokens an eine nicht vertrauenswürdige elektronische Vorrichtung (211), die angeordnet ist, Zugriff auf den Inhalt, der vom Token identifiziert wird, anzufordern,
- Senden einer zweiten Nachricht an den Server (201) wobei die zweite Nachricht eine Nähe der nicht vertrauenswürdigen elektronischen Vorrichtung (211) zur vertrauenswürdigen elektronischen Vorrichtung (212) anzeigt, um die gemeinsame Verwendung des Inhalts zu unterbrechen, wenn die zweite Nachricht eine Anzeige eines Verlusts der Nähe zwischen der nicht vertrauenswürdigen elektronischen Vorrichtung (211) und der vertrauenswürdigen elektronischen Vorrichtung (212) umfasst.

9. System, das einen Server, der betreibbar ist, auf einen Inhalt zuzugreifen, der in einer Datenbank gehostet wird, auf die ein Server (201) Zugriff hat, eine vertrauenswürdige elektronische Vorrichtung (212) zum Zugreifen auf einen Inhalt, der in einer Datenbank gehostet wird, auf die der Server (201) Zugriff hat, eine nicht vertrauenswürdige elektronische Vorrichtung (211) zum Zugreifen auf einen Inhalt, der in einer Datenbank gehostet wird, auf die der Server (201) Zugriff hat, umfasst, wobei das System zu Folgendem angeordnet ist:
- Senden einer ersten Nachricht, die einen Bezug zu einem Inhalt umfasst, der auf dem Server (201) gehostet wird, von der vertrauenswürdigen elektronischen Vorrichtung (212) an den Server (201),
- Erzeugen eines ersten Tokens durch den Server (201), wobei das erste Token mit dem Bezug zu einem Inhalt, der auf dem Server (201) gehostet wird, verknüpft ist,
- Senden des ersten Tokens vom Server (201) an die vertrauenswürdige elektronische Vorrichtung (212),
- Senden einer Anforderung von der nicht vertrauenswürdigen elektronischen Vorrichtung (211) an den Server (201), wobei die Anforderung ein zweites Token umfasst,
- wenn das erste und das zweite Token übereinstimmen, Senden des Inhalts, der durch den Bezug identifiziert wird, vom Server (201) an die nicht vertrauenswürdige elektronische Vorrichtung (211),
- Senden einer zweiten Nachricht von der vertrauenswürdigen elektronischen Vorrichtung (212) an den Server (201),
- Unterbrechen des Sendens des Inhalts durch den Server (201), wenn die zweite Nachricht eine Anzeige eines Verlusts der Nähe zwischen der vertrauenswürdigen elektronischen Vorrichtung (212) und der nicht vertrauenswürdigen elektronischen Vorrichtung (211) anzeigt.

## Revendications

1. Procédé pour partager un contenu hébergé sur une base de données accessible à un fournisseur de contenu (201), le procédé étant mis en œuvre par le fournisseur de contenu (201) et comprenant les étapes :
- recevoir un premier message en provenance d'un premier dispositif (212), comprenant une référence à un contenu hébergé sur le serveur (201),
- générer un premier jeton, le premier jeton étant associé à la référence à un contenu hébergé sur le serveur (201),
- envoyer le jeton au premier dispositif (212),
- recevoir une demande en provenance d'un deuxième dispositif (211), la demande comprenant un deuxième jeton,
- lorsque les premier et deuxième jetons constituent une correspondance, envoyer le contenu identifié par la référence au deuxième dispositif (211),
le procédé comprenant également les étapes consistant à :
- recevoir un deuxième message en provenance du premier dispositif,
- interrompre l'envoi du contenu si le deuxième message comprend une indication d'une perte de proximité entre les premier et deuxième dispositifs.

2. Procédé selon la revendication précédente, comprenant en outre l'étape :
- identifier au moyen du premier jeton la référence au contenu hébergé sur le serveur.

3. Procédé selon l'une des revendications 1 et 2, comprenant en outre les étapes :
- recevoir un deuxième message en provenance du premier dispositif, le deuxième message indiquant une proximité du deuxième dispositif avec le premier dispositif,
- interrompre l'envoi du contenu après une quantité de temps prédéterminée depuis la réception du deuxième message si aucun troisième message, indiquant également une proximité du deuxième dispositif avec le premier dispositif, n'est reçu.

4. Procédé selon l'une des revendications précédentes, comprenant en outre, lorsque les premier et deuxième jetons constituent une correspondance, une révocation du premier jeton si la correspondance n'est pas une première correspondance.

5. Procédé selon l'une des revendications précédentes, comprenant en outre une notification du premier dispositif que le jeton a été révoqué.

6. Serveur capable d'accéder à un contenu hébergé sur une base de données, le serveur comprenant en outre un processeur agencé pour :
- recevoir un premier message en provenance d'un premier dispositif (212), comprenant une référence à un contenu hébergé sur le serveur,
- générer un premier jeton, le premier jeton étant associé à la référence à un contenu hébergé sur le serveur,
- envoyer le jeton au premier dispositif (212),
- recevoir une requête en provenance d'un deuxième dispositif (211), la requête comprenant un deuxième jeton,
- et, lorsque les premier et deuxième jetons constituent une correspondance, envoyer le contenu identifié par la référence au deuxième dispositif (211),
le processeur étant en outre agencé pour :
- recevoir un deuxième message en provenance du premier dispositif,
- interrompre l'envoi du contenu si le deuxième message comprend une indication d'une perte de proximité entre les premier et deuxième dispositifs.

7. Programme d'application mis en œuvre sur un support non transitoire lisible par ordinateur et agencé pour exécuter le procédé selon les revendications 1 à 5.

8. Dispositif électronique de confiance (212) servant à partager un contenu hébergé sur une base de données accessible à un serveur (201) avec un dispositif électronique non de confiance (211), ledit dispositif électronique de confiance (212) étant agencé pour :
- envoyer un premier message au serveur (201), ledit message comprenant une référence à un contenu hébergé sur le serveur,
- recevoir un premier jeton, le premier jeton étant associé à la référence à un contenu hébergé sur le serveur (201),
- envoyer le jeton à un dispositif électronique non de confiance (211) agencé pour requérir l'accès au contenu identifié par le jeton,
- envoyer un deuxième message au serveur (201), le deuxième message indiquant une proximité du dispositif électronique non de confiance (211) avec le dispositif électronique de confiance (212) pour interrompre le partage du contenu si le deuxième message comprend une indication d'une perte de proximité entre le dispositif électronique non de confiance (211) et le dispositif électronique de confiance (212).

9. Système comprenant un serveur capable d'accéder à un contenu hébergé sur une base de données accessible à un serveur (201), un dispositif électronique de confiance (212) servant à accéder à un contenu hébergé sur une base de données accessible au serveur (201), un dispositif électronique non de confiance (211) servant à accéder à un contenu hébergé sur une base de données accessible au serveur (201), ledit système étant agencé pour :
- envoyer au serveur (201) un premier message depuis le dispositif électronique de confiance (212), comprenant une référence à un contenu hébergé sur le serveur (201),
- générer par le serveur (201) un premier jeton, le premier jeton étant associé à la référence à un contenu hébergé sur le serveur (201),
- envoyer depuis le serveur (201) le premier jeton au dispositif électronique de confiance (212),
- envoyer au serveur (201) une requête depuis le dispositif électronique non de confiance (211), la requête comprenant un deuxième jeton,
- lorsque les premier et deuxième jetons constituent une correspondance, envoyer depuis le serveur (201) le contenu identifié par la référence au dispositif électronique non de confiance (211),
- envoyer au serveur (201) un deuxième message depuis le dispositif électronique de confiance (212),
- interrompre par le serveur (201) l'envoi du contenu si le deuxième message comprend une indication d'une perte de proximité entre le dispositif électronique de confiance (212) et le dispositif électronique non de confiance (211).
